# EUROPEAN PATENT SPECIFICATION

(11) **EP 0 624 267 B1**
(45) Date of publication and mention of the grant of the patent: **03.03.1999**
(21) Application number: 93919771.1
(22) Date of filing: 24.08.1993
(51) Int. Cl.: G06F 1/00

(54) **METHOD AND DEVICE FOR PREVENTING UNAUTHORISED ACCESS TO A COMPUTER SYSTEM**
VERFAHREN UND EINRICHTUNG ZUR VERHINDERUNG DES UNBERECHTIGTEN ZUGRIFFS AUF EIN RECHNERSYSTEM.
PROCEDE ET DISPOSITIF INTERDISANT L'ACCES NON AUTORISE A UN SYSTEME INFORMATIQUE

(30) Priority: 25.08.1992 SE 9202427
(43) Date of publication of application: 17.11.1994
(73) Proprietor: ICL Systems Aktiebolag, S-164 93 Kista (SE)
(72) Inventor: SJÖQUIST, Tom, S-582 35 Linköping (SE)
(74) Representative: Dupuy, Susan Mary
(86) International application number: SE9300702
(87) International publication number: WO9404972

(56) References cited:
- EP-A- 0 427 465
- EP-A- 0 481 770
- WO-A-92/04671
- DE-A- 3 512 785
- US-A- 4 951 249
- US-A- 5 018 096
- IBM TECHNICAL DISCLOSURE BULETIN vol. 35, no. 4A, September 1992, pages 373 - 375 'USING A LOCAL PASSWORD FOR TWO-STEP AUTHENTICATION'

## Description

The present invention relates generally to protection against unauthorised use of a computer system, e.g. a personal computer, comprising a processing unit or the like, a disc unit for floppy discs, a display and a keyboard.

There are prior art techniques of preventing such unauthorised access.

A first variant means that the user has to identify himself by a personal code via the keyboard, which code is checked by software stored in the computer system against one or more corresponding codes stored in the computer system. When the personal code and the corresponding code or one of the corresponding codes stored in the computer system conform to each other, the user is allowed to use the computer system, i.e. data or instructions entered by the user are accepted and processed. However, the security of this technique is not satisfactory.

A second, more reliable variant has therefore been developed. This requires the use of a card with a magnetic strip or an integrated circuit in which the identity information is stored. This requires, however, a special card reader reading the identity information into the computer system, which decides, based on either this information only or a combination of this information and a personal code entered via the keyboard, whether the user is authorised or not. One drawback of this solution is that it requires a special card reader.

A third variant, see DK-A-6229/89, tries to eliminate the last-mentioned drawback by providing a floppy disc with an integrated circuit containing a processing part and a memory part, and an interface via which the read and write equipment in a disc unit for floppy discs can transfer information between the integrated circuit and the computer system in which the disc unit is included. Of course, this eliminates the need of a separate card reader, but the special floppy disc will be complicated because of the arrangement of the integrated circuit and the associated interface, and since it requires a source of current supply of its own, for example a built-in battery.

The object of the present invention therefore is to provide a method for preventing unauthorised access to a computer, and a device for carrying out the method, which assure high security but do not require any additional equipment in the form of e.g. cards, a card reader or special integrated circuits.

More precisely, according to the invention a personal identification code is recorded on the floppy disc, said personal identification code containing the user's name in plain text and an access code which is encrypted by using a one-way encrypting function. By name is here, of course, meant the user's name or the like which is unique for each user. The floppy disc may contain further information in addition to the personal identification code, as will be exemplified below. The floppy disc also contains an authenticity code which is formed by means of a system access code which is, in turn, stored in a permanent memory which is not accessible to any user but the system administrator, i.e. the permanent memory is lockable by the system administrator. More precisely, the authenticity code is developed by encrypting the information recorded on the floppy disc, with the exclusion of the actual authenticity code, by using the system access code as a key. The function itself is a one-way encrypting function.

In the method and the device according to the invention, the floppy disc with the above-mentioned codes is first inserted into the disc unit. Subsequently, the computer system is started and reads via its BIOS (Basic Input Output System) all the information of the floppy disc as well as the authenticity code which in order to authenticate the information previously read is checked by means of a function which uses the system access code stored in said permanent memory together with all said information read from the floppy disc, wherein said function computes said authenticity code and compares said computed authenticity code with the authenticity code read feam the disc.

In case of a positive result of this check, the BIOS of the system initiates a request to the user to enter, via the keyboard, his personal identification code.

Next, the part of the personal identification code containing the name of the user is checked against the one read from the floppy disc and stored thereon as plain text, and after being encrypted by the one-way encrypting function, the part of the personal identification code containing the access code is checked against the access code read from the floppy disc.

If one or some of the checks described above turn out negative, the user is not allowed to use the computer system. If, however, all checks turn out positive, the user is allowed to use the system.

In a preferred embodiment, if all three checks turn out positive, use is made of further information which is read from the floppy disc and which defines the extent of the user's authorisation to use the computer ; this information which is stored on said floppy disc in encrypted form, after decryption is used to control what the user is allowed to do. The used encrypting/decrypting key is a function of the combination of the user's name and the system access code, stored in the lockable, permanent memory. This technique is above all applicable if not all users of the computer system should be allowed to perform all operations that are possible in the system.

Thus, the invention eliminates the possibility of copying a different user's floppy disc thereon called "access disc", and the possibility of changing the extent of the one's own authorisation.

Moreover, the access disc can contain information in the form of data that are necessary for preparing the computer system for operation to the extent of the user's valid authorisation, e.g. log-on information and other user-specific information. Furthermore, the floppy disc can contain information in the form of service routines which make it possible to read and update the information on the floppy disc, if the system access code is known.

The method and the device for preventing unauthorised access to a computer system comprising at least one processing unit including a memory, a disc unit, a display and a key-board, have thus according to the invention the features as defined in independent claims 1 and 5, respectively. Preferred embodiments are defined in the appended dependent claims.

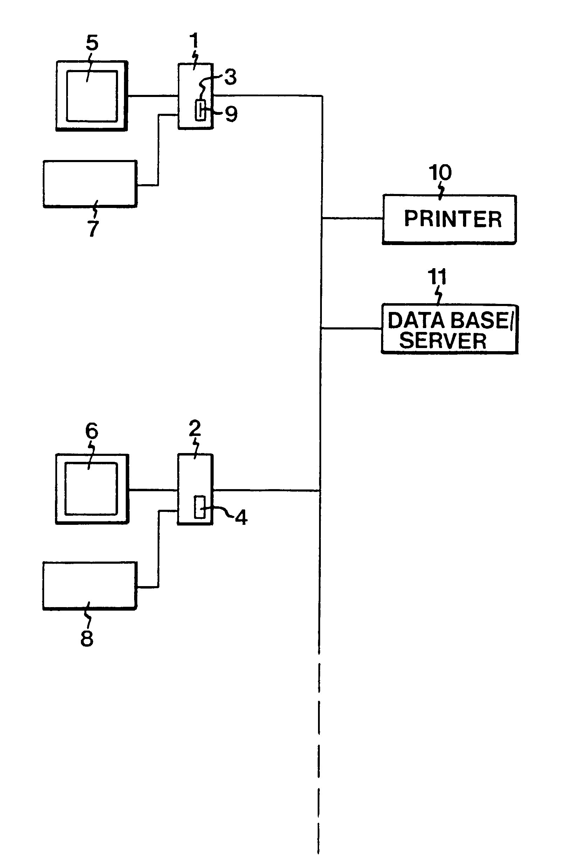

The invention will now be described in more detail with reference to the accompanying drawing which illustrates a computer system to which the invention is applicable.

The invention is applicable in case of computer, for example a personal computer in a stand alone configuration which may also be included in a network.

An embodiment of the invention is illustrated in the drawing and comprises a network of personal computers 1, 2, each including a disc unit 3, 4 and each having a display 5, 6 and a keyboard 7, 8. A floppy disc 9 is shown to be inserted into the disc unit 3. Joint resources in the network are exemplified by a printer 10 and a data base unit or server 11.

According to the invention, use is made of a special floppy disc, called access disc, for checking a user's authorisation to use said computers both as stand alone configuration and as included in a network. More precisely, the user's name or the like, which is unique for the user, is recorded on the access disc as plain text, i.e. non-encrypted. Moreover, an access code is recorded on the same access disc. In contrast to the name, this access code is recorded in encrypted form, a one-way encrypting function being used for the encryption, i.e. a function which does not allow decryption of the result of the encryption. In practice, it should thus be impossible to derive the non-encrypted access code from the encrypted access code.

The name and the access code form a personal identification code which is unique for the user.

On the access disc there is also recorded an authenticity code formed by means of a system access code according to the method below described which, in turn, is stored in an area of said memory which is not accessible to any user but the system administrator. Said area of said memory can thus be locked by the system administrator.

Moreover, the access disc can advantageously contain information which is recorded in encrypted form and states to what extent the authorised user may use the computer system, for example whether the user should have access to e.g. serial or parallel ports, as well as the length of the access time and the allowed software may here be involved.

In each personal computer 1, 2, there is thus a lockable memory area for storing the system access code which is unique for the system administrator preparing the access discs, and which is combined with the authorised user's name for forming an encrypting/decrypting key for said information stating to what extent the authorised user should be allowed to use said computer both as stand alone and as included in a network.

The device described above functions as follows.
1. An authorised user who wishes to use e.g. the personal computer 1 inserts his access disc 9 into the disc unit 3 before start-up of the computer 1.
2. In the subsequent start-up of the computer 1, its BIOS will provide reading of the authenticity code from the access disc 9 inserted into the disc unit 3, and all the information recorded thereon, except the above-mentioned data for permitting operation of the computer system to the extent of the user's authorisation.
3. The BIOS of the computer 1 then checks the authenticity of the information read, by authenticating this with the system access code as a key. The authentication function is a one-way encrypting function using said system access code as key. The authentication thus results in an authenticity code which is compared with the authenticity code read from the access disc. If the result of the comparison and, thus, the check is negative, the user is informed via the display 5 that access to the computer is not allowed. Alternatively, this message can be delivered only after execution of all the checks.
4. The BIOS of the computer 1 then generates, in case of a positive result of the first check, a request to the user via the display 5 to enter his name or the like, as well as the access code in non-encrypted form via the keyboard 7.
5. The BIOS of the computer 1 then checks whether the entered name conforms with the name read from the access disc, and encrypts the entered, non-encrypted access code and, subsequently, checks whether the result of this encryption conforms with the encrypted access code read from the access disc.
6. Only if all three described checks or comparisons yield a positive result, i.e. conformity prevails, the user is given access to the computer 1, and this is preferably shown via the display 5.

Since different users of the computer system should normally not have access to all the equipment thereof, the access disc suitably also contains the above-mentioned information stating to what extent the authorised user will be allowed to use the computer system. This information can be read from the access disc at the same time as the authenticity code and the personal identification code or, alternatively, be read only after these have been checked with a positive result. After establishing that the user is authorised and said information has been read, the information is decrypted by means of the decrypting key described above that is the decrypting key is a predetermined function of the combination of the system access code and the user's name. The BIOS of the computer 1 subsequently uses the information to prepare the computer 1 for operation to the extent stated by said information. Additional necessary data for such preparation can also be recorded on the access disc.

It will be appreciated that the method and the device according to the invention afford high security against unauthorised use of the computer system, both regarding the access thereto and regarding the extent of the access. By means of the special access disc and the method of using it, the invention also ensures that this high security can be achieved without necessitating any additional equipment.

## Claims

1. Method for preventing access to a computer, comprising a processing unit, a memory, a disc unit for floppy discs, a display and a keyboard, **characterised** by the steps of
recording, on a floppy disc hereon indicated as access disc, a personal identification code which is unique for each user and includes the user's name recorded in plain text and an encrypted access code, the encryption being carried out by means of a one-way encryption function,
recording, on the same access disc, an authenticity code which is formed by encrypting at least said personal identification code, by means of using a function and a system access code, wherein said system access code is stored in a predetermined area of said memory that is not accessible by said user but only by a system administrator that is enabled to lock said memory, and wherein said function is a one-way encrypting function using said system access code as a key,
inserting said access disc into the disc unit before the start-up of said computer,
during the starting-up, said computer reading at least said personal identification code and the authenticity code from said access disc,
said computer then checking the authenticity of the information read from said access disc by encrypting at least said personal identification code by using said function and said system access code as a key, there resulting therefrom a newly computed authenticity code which is compared with the authenticity code previously read from said access disc,
said computer subsequently, at least in the case of a positive result of said check, requesting the user via the display to enter his name and his access code in non-encrypted form via the keyboard,
said computer checking, after the entering has been carried out, the name previously read from the access disc against the entered name,
said computer encrypting the entered access code, while using said one-way encrypting function and said system access code as key and, subsequently, checking the result against the read, encrypted access code by using said encrypting function and said system access code as key and comparing said newly encrypted access code with the encrypted access code previously read from said access discs, and
said computer giving the user access to said computer only in case of a positive result of all three checks.

2. Method as claimed in claim 1, **characterised** in that information stating the extent of authorisation, that is stating to what extent said user is allowed to use said computer, is recorded in encrypted form on said access disc together with the personal identification code, and wherein said information [are] is decrypted only in the case of a positive result of all the previous three checks, and wherein said computer gives the user access to said computer to the extent stated by said information.

3. Method as claimed in claim 2, **characterised** in that the information about the extent of the authorisation is encrypted and decrypted, wherein said user's name and said system access code have been previously stored in said predetermined area of said memory accessible only by said system administrator, which is enabled to lock said memory area.

4. Method as claimed in claim 3, **characterised** in that the encryption and decryption are carried out by means of [en] an encrypting key which is a function of the combination of the user's name and the system access code.

5. System for preventing unauthorised access to a computer, comprising at least one processing unit, a memory, a disc unit (3), a display (5), and a keyboard (7), **characterised** in that it includes
[a] an access disc (9), on which information is recorded at least in the form of a personal identification code which is unique for each user and includes the user's name recorded in plain text and an access code encrypted by means of a one-way encrypting function, and an authenticity code formed [formed] by encrypting at least said personal identification code by using said function and said system access code as key, wherein said system access code is stored in a predetermined area of said memory that is not accessible by said user but only by a system administrator that is enabled to lock said memory, and wherein said function is a one-way encrypting function using said system access code as key, and that said computer comprises means to read, after insertion of said access disc into said disc unit, during starting-up, at least said personal identification code recorded on said access disc, and said authenticity code, checking means to check the authenticity of said personal identification code and said authenticity code, wherein said checking means comprise means to encrypt said personal identification code by using said function and said system access code as key, there resulting therefrom a newly computed authenticity code, and comparing means to compare said computed authenticity code with the authenticity code previously read from said access disc, means to request via the display, at least in case of a positive result of said check, the user to enter his name and his access code in non-encrypted form via the keyboard, means to compare the user's name entered by the user with the user's name read from said access disc, means to encrypt the access code previously entered by the user in plain text, by using said encrypting function and said system access code as key and means to compare said newly encrypted access code with the encrypted access code previously read from said access disc, and, only in the case of a positive result of all three checks, to give the user access to the computer.

6. System as claimed in claim 5, **characterised** in that on said access disc, information about the extent of authorisation, that is stating to what extent said user is allowed to use the computer, is also recorded, in addition to the personal identification code, and that said computer further comprises means to decrypt said information about the extent of authorisation in case of a positive result of all said three checks, and means to give the user access to said computer to the extent stated by said information.

7. System as claimed in claim 6, **characterised** in that it includes means to encrypt and decrypt the information about the extent of authorisation, by using the system access code stored in said predetermined lockable memory area.

8. System as claimed in claim 5, **characterised** in that said computer comprises means to encrypt and decrypt the information about the extent of the authorisation using a key which is a function of the combination of said user's name and said system access code.

## Patentansprüche

1. Verfahren zum Verhindern des Zugriffs auf einen Computer, mit einer Verarbeitungseinheit, einem Speicher, einer Disketteneinheit für Disketten und einer Tastatur, **dadurch gekennzeichnet,** daß
auf einer Diskette, die hier als Zugriffsdiskette bezeichnet wird, ein personenbezogener Identifizier-Code aufgezeichnet wird, der für jeden Benutzer eindeutig ist und den Namen des Benutzers in voller Textschrift und in einem verschlüsselten Zugriffs-Code enthält, wobei die Verschlüsselung mit Hilfe einer Einweg-Verschlüsselungsfunktion ausgeführt wird,
auf der gleichen Zugriffs-Diskette ein Authentizitäts-Code aufgezeichnet wird, der durch Verschlüsseln mindestens dieses personenbezogenen Identifizier-Codes gebildet wird, und zwar unter Verwendung eines Funktions-Codes und eines Systemzugriffs-Codes, wobei der Systemzugriffs-Code in einem vorbestimmten Bereich des Speichers gespeichert ist, der nicht von einem Benutzer, sondern nur von einem System-Administrator zugegriffen werden kann, welcher in der Lage ist, den Speicher zu verriegeln, und wobei die Funktion eine Einweg-Verschlüsselungsfunktion ist, die den Systemzugriffs-Code als Schlüssel verwendet,
die Zugriffsdiskette in die Disketteneinheit eingesetzt wird, bevor der Computer angefahren wird,
während des Anfahrens der Computer mindestens den personenbezogenen Identifizier-Code und den Authentizitäts-Code aus der Zugriffsdiskette ausliest,
der Computer dann die Authentizität der aus der Zugriffsdiskette ausgelesenen der Information prüft, indem mindestens der personenbezogene Identifizier-Code dadurch verschlüsselt wird, daß der Funktions-Code und der Systemzugriffs-Code als ein Schlüssel verwendet werden, wobei sich daraus ein neu berechneter Authentizitäts-Code ergibt, der mit dem Authentizitäts-Code verglichen wird, welcher vorher aus der Zugriffsdiskette vorher ausgelesen worden ist,
der Computer anschließend, zumindest im Falle eines positiven Resultats der Prüfung, den Benutzer über den Bildschirm beauftragt, seinen Namen und seinen Zugriffs-Code in nicht verschlüsselter Form über die Tastatur einzugeben,
der Computer nach Ausführung des Eingebens den vorher aus der Zugriffsdiskette ausgelesenen Namen gegen den eingegebenen Namen prüft,
der Computer den eingeführten Zugriffs-Code verschlüsselt, während die Einweg-Verschlüsselungsfunktion und der Systemzugriffs-Code als Schlüssel verwendet werden und das Resultat gegen den ausgelesenen, verschlüsselten Zugriffs-Code dadurch prüft, daß die Verschlüsselungsfunktion und der Systemzugriffs-Code als Schlüssel verwendet werden und der neu verschlüsselte Zugriffs-Code mit dem verschlüsselten Zugriffs-Code vor dem Auslesen aus den Zugriffsdisketten verglichen wird, und
der Computer dem Benutzer den Zugang zum Computer nur dann erteilt, wenn ein positives Resultat aller drei Überprüfungen vorliegt.

2. Verfahren nach Anspruch 1, dadurch gekennzeichnet, daß Informationen, die das Ausmaß der Authorisierung angeben, d.h. feststellen, bis zu welchem Grad der Benutzer in die Lage versetzt wird, den Computer zu benutzen, in verschlüsselter Form auf die Zugriffsdiskette zusammen mit dem personenbezogenen Identifizier-Code aufgezeichnet werden, und daß die Informationen nur im Falle eines positiven Resultats aller vorausgehenden drei Prüfungen entschlüsselt werden, und der Computer dem Benutzer Zugang zum Computer in dem Ausmaß gestattet, wie dies durch die Informationen festgelegt ist.

3. Verfahren nach Anspruch 2, dadurch gekennzeichnet, daß die Informationen über den Umfang der Authorisierung verschlüsselt und entschlüsselt werden, wobei der Name des Benutzers und der Systemzugriffs-Code vorher in dem vorbestimmten Bereich des Speichers gespeichert worden sind, der nur durch den System-Administrator zugänglich ist, welcher so gesteuert wird, daß er den Speicherbereich verriegelt.

4. Verfahren nach Anspruch 3, dadurch gekennzeichnet, daß die Verschlüsselung und Entschlüsselung mit Hilfe eines Verschlüsselungs-Schlüssels durchgeführt wird, der eine Funktion der Kombination aus dem Benutzer-Namen und dem Benutzer-Systemzugriffs-Code ist.

5. System zum Verhindern eines unbefugten Zugriff auf einen Computer, mit mindestens einer Verarbeitungseinheit, einem Speicher, einer Disketteneinheit (3), einem Bildschirm (5) und einer Tastatur (7), dadurch gekennzeichnet, daß das System aufweist:
eine Zugriffs-Diskette (9), auf der Informationen mindestens in Form eines personenbezogenen Identifizier-Codes aufgezeichnet sind, der für jeden Benutzer eindeutig ist und den Namen des Benutzers in Volltext sowie einen Zugriffs-Code, der mit Hilfe einer Einweg-Verschlüsselungsfunktion verschlüsselt aufgezeichnet enthält, und einen Authentizitäts-Code umfaßt, der durch Verschlüsseln des Funktions- und des Systemzugriffs-Codes als Schlüssel ausgebildet ist, wobei der Systemzugriffs-Code in einem vorbestimmten Bereich des Speichers gespeichert ist, der nicht von dem Benutzer, sondern nur von einem System-Administrator zugegriffen werden kann, welcher in der Lage ist, den Speicher zu verriegeln, und wobei die Funktion eine Einweg-Verschlüsselungsfunktion ist, die den Systemzugriffs-Code als Schlüssel verwendet, und
der Computer aufweist: eine Vorrichtung, die nach dem Einsetzen der Zugriffs-Diskette in die Disketteneinheit während des Anfahrens mindestens den personenbezogenen Identifizier-Code, der auf der Zugriffs-Diskette aufgezeichnet ist und den Authentizitäts-Code liest, eine Prüfvorrichtung, die die Authentizität des personenbezogenen Identifizier-Codes und des Authentizitäts-Codes prüft, wobei die Prüfvorrichtung eine Vorrichtung zum Verschlüsseln des personenbezogenen Identifizier-Codes durch Verwendung des Funktions- und des Systemszugriffs-Codes als Schlüssel benutzt, woraus sich ein neu berechneter Authentizitäts-Code ergibt, eine Vergleichsvorrichtung, die den berechneten Authentizitäts-Code mit dem vorher aus der Zugriffs-Diskette ausgelesenen Authentizitäts-Code vergleicht, eine Vorrichtung, die über den Bildschirm mindestens im Falle eines positiven Resultats der Prüfung den Benutzer veranlaßt, seinen Namen und seinen Zugriffs-Code in nicht verschlüsselter Form über die Tastatur einzugeben, eine Vorrichtung, die den von dem Benutzer eingegebenen Benutzer-Namen mit dem Benutzer-Namen, der aus der Zugriffs-Diskette ausgelesen wird, vergleicht, eine Vorrichtung, die den Zugriffs-Code, der vorher von dem Benutzer in Volltext eingeführt worden ist, dadurch verschlüsselt, daß die Verschlüsselungsfunktion und der Systemzugriffs-Code als Schlüssel verwendet werden, und eine Vorrichtung, die den neu verschlüsselten Zugriffs-Code mit dem verschlüsselten Zugriffs-Code, der vorher aus der Zugriffs-Diskette ausgelesen worden ist, ausschließlich für den Fall eines positiven Resultats aller drei Prüfungen vergleicht, um dem Benutzer den Zugriff zum Computer zu genehmigen.

6. System nach Anspruch 5, dadurch gekennzeichnet, daß auf der Zugriffs-Diskette Informationen über den Grad der Authorisierung, die angibt, bis zu welchem Ausmaß der Benutzer in der Lage ist, den Computer zu benutzen, zusätzlich zu dem personenbezogenen Identifizier-Code aufgezeichnet sind, und der Computer ferner eine Vorrichtung, die die Informationen über das Ausmaß der Authorisierung im Falle eines positiven Resultats aller drei Prüfungen entschlüsselt, sowie eine Vorrichtung, die dem Benutzer Zugang zu dem Computer bis zu dem Ausmaß, das durch die Informationen bestimmt ist, gewährt, umfaßt.

7. System nach Anspruch 6, dadurch gekennzeichnet, daß das System eine Vorrichtung zum Verschlüsseln und Entschlüsseln der Informationen über das Ausmaß der Authorisierung aufweist, in dem der Systemzugriffs-Code benutzt wird, der in dem vorbestimmten, verriegelbaren Speicherbereich gespeichert ist.

8. System nach Anspruch 5, dadurch gekennzeichnet, daß der Computer eine Vorrichtung zum Verschlüsseln und Entschlüsseln der Informationen über das Ausmaß der Authorisierung unter Verwendung eines Schlüssels aufweist, der eine Funktion der Kombination des Benutzer-Namens und des Systemzugriffs-Codes ist.

## Revendications

1. Procédé destiné à empêcher un accès à un ordinateur, comprenant une unité de traitement, une mémoire, une unité de disque destinée à des disques souples, un dispositif d'affichage et un clavier, caractérisé par les étapes consistant à :
enregistrer, sur un disque souple (indiqué ici comme étant un disque d'accès), un code d'identification personnel qui est unique pour chaque utilisateur et comprend le nom de l'utilisateur enregistré en texte en clair et un code d'accès crypté, le cryptage étant exécuté au moyen d'une fonction de cryptage unidirectionnelle,
enregistrer, sur le même disque d'accès, un code d'authenticité qui est constitué en cryptant au moins ledit code d'identification personnel, au moyen de l'utilisation d'une fonction et un code d'accès au système, dans lequel ledit code d'accès au système est mémorisé dans une zone prédéterminée de ladite mémoire qui n'est pas accessible audit utilisateur mais uniquement à un administrateur du système qui est habilité à verrouiller ladite mémoire et dans lequel ladite fonction est une fonction de cryptage unidirectionnelle utilisant ledit code d'accès au système en tant que clé,
insérer ledit disque d'accès dans l'unité de disque avant l'amorçage dudit ordinateur,
durant l'amorçage, ledit ordinateur lisant au moins ledit code d'identification personnel et le code d'authenticité à partir dudit disque d'accès,
ledit ordinateur contrôlant alors l'authenticité des informations lues à partir dudit disque d'accès en cryptant au moins ledit code d'identification personnel en utilisant ladite fonction et ledit code d'accès au système en tant que clé, le résultat de ceci étant un code d'authenticité nouvellement calculé qui est comparé au code d'authenticité lu au préalable à partir dudit disque d'accès,
ledit ordinateur, ensuite, au moins dans le cas d'un résultat positif dudit contrôle, demandant à l'utilisateur par l'intermédiaire du dispositif d'affichage de saisir son nom et son code d'accès sous une forme non cryptée par l'intermédiaire du clavier,
ledit ordinateur contrôlant, après l'exécution de la saisie, le nom lu au préalable à partir du disque d'accès vis-à-vis du nom saisi,
ledit ordinateur cryptant le code d'accès saisi, tout en utilisant ladite fonction de cryptage unidirectionnelle et ledit code d'accès au système en tant que clé et, contrôlant ensuite le résultat vis-à-vis du code d'accès crypté lu en utilisant ladite fonction de cryptage et ledit code d'accès au système en tant que clé et en comparant ledit code d'accès nouvellement crypté au code d'accès crypté lu au préalable à partir desdits disques d'accès, et
ledit ordinateur donnant à l'utilisateur accès audit ordinateur uniquement dans le cas d'un résultat positif de la totalité des trois contrôles.

2. Procédé selon la revendication 1, caractérisé en ce que des informations établissant l'étendue de l'autorisation, c'est-à-dire établissant dans quelle mesure ledit utilisateur est autorisé à utiliser ledit ordinateur, sont enregistrées sous forme cryptée sur ledit disque d'accès en même temps que le code d'identification personnel, et dans lequel lesdites informations ne sont décryptées que dans le cas d'un résultat positif de la totalité des trois contrôles précédents, et dans lequel ledit ordinateur donne à l'utilisateur accès audit ordinateur dans la mesure établie par lesdites informations.

3. Procédé selon la revendication 2, caractérisé en ce que les informations concernant l'étendue de l'autorisation sont cryptées et décryptées, dans lequel ledit nom de l'utilisateur et ledit code d'accès au système ont été mémorisés au préalable dans ladite zone prédéterminée de ladite mémoire qui n'est accessible audit administrateur du système, lequel est habilité à verrouiller ladite zone de mémoire.

4. Procédé selon la revendication 3, caractérisé en ce que le cryptage et le décryptage sont exécutés au moyen d'une clé de cryptage qui est une fonction de la combinaison du nom de l'utilisateur et du code d'accès au système.

5. Système destiné à empêcher un accès non autorisé à un ordinateur, comprenant au moins une unité de traitement, une mémoire, une unité de disque (3), un dispositif d'affichage (5), et un clavier (7), caractérisé en ce qu'il comprend
[a] un disque d'accès (9), sur lequel des informations sont enregistrées au moins sous forme d'un code d'identification personnel qui est unique pour chaque utilisateur et comprend le nom de l'utilisateur enregistré en texte en clair et un code d'accès crypté au moyen d'une fonction de cryptage unidirectionnelle, et un code d'authenticité formé en cryptant au moins ledit code d'identification personnel en utilisant ladite fonction et ledit code d'accès en tant que clé, dans lequel ledit code d'accès au système est mémorisé dans une zone prédéterminée de ladite mémoire qui n'est pas accessible audit utilisateur mais uniquement à un administrateur du système qui est habilité à verrouiller ladite mémoire, et dans lequel ladite fonction est une fonction de cryptage unidirectionnelle utilisant ledit code d'accès au système en tant que clé, et
en ce que ledit ordinateur comprend un moyen destiné à lire, après insertion dudit disque d'accès dans ladite unité de disque, durant l'amorçage, au moins ledit code d'identification personnel enregistré sur ledit disque d'accès, et ledit code d'authenticité, un moyen de contrôle destiné à contrôler l'authenticité dudit code d'identification personnel et dudit code d'authenticité, dans lequel ledit moyen de contrôle comprend un moyen destiné à crypter ledit code d'identification personnel en utilisant ladite fonction et ledit code d'accès au système en tant que clé, le résultat de ceci étant un code d'authenticité nouvellement calculé, et un moyen de comparaison destiné à comparer ledit code d'authenticité calculé au code d'authenticité lu au préalable à partir dudit disque d'accès, un moyen destiné à demander par l'intermédiaire du dispositif d'affichage, au moins dans le cas d'un résultat positif dudit contrôle, à l'utilisateur de saisir son nom et son code d'accès sous une forme non cryptée par l'intermédiaire du clavier, un moyen destiné à comparer le nom de l'utilisateur saisi par l'utilisateur au nom de l'utilisateur lu à partir dudit disque d'accès, un moyen destiné à crypter le code d'accès saisi au préalable par l'utilisateur en texte en clair, en utilisant ladite fonction de cryptage et ledit code d'accès au système en tant que clé et un moyen destiné à comparer ledit code d'accès nouvellement crypté au code d'accès crypté lu au préalable à partir dudit disque d'accès, et uniquement dans le cas d'un résultat positif de la totalité des trois contrôles, pour donner à l'utilisateur accès à l'ordinateur.

6. Système selon la revendication 5, caractérisé en ce que ledit disque d'accès, les informations concernant l'étendue de l'autorisation, c'est-à-dire établissant dans quelle mesure ledit utilisateur a l'autorisation d'utiliser l'ordinateur, sont aussi enregistrées, en plus du code d'identification personnel, et en ce que ledit ordinateur comprend en outre un moyen pour décrypter lesdites informations concernant l'étendue de l'autorisation dans le cas d'un résultat positif de tous lesdits trois contrôles, et un moyen pour donner accès à l'utilisateur dudit ordinateur dans la mesure établie par lesdites informations.

7. Système selon la revendication 6, caractérisé en ce qu'il comprend un moyen de cryptage et décryptage des informations concernant l'étendue de l'autorisation, en utilisant le code d'accès au système mémorisé dans ladite zone de mémoire verrouillable prédéterminée.

8. Système selon la revendication 5, caractérisé en ce que ledit ordinateur comprend un moyen de cryptage et de décryptage des informations concernant l'étendue de l'autorisation d'utilisation d'une clé qui est une fonction de la combinaison dudit nom de l'utilisateur et dudit code d'accès au système.
